# EUROPEAN PATENT APPLICATION

(11) **EP 3 151 563 A1**
(43) Date of publication of application: **05.04.2017**
(21) Application number: 15306532.1
(22) Date of filing: 29.09.2015
(51) Int. Cl.: H04N 19/587, H04N 19/59, H04N 19/139, H04N 19/117, H04N 19/17, H04N 19/132, H04N 19/167

(54) **ENCODING METHOD AND DEVICE FOR ENCODING A SEQUENCE OF FRAMES INTO TWO VIDEO STREAMS, DECODING METHOD AND DEVICE AND CORRESPONDING COMPUTER PROGRAM PRODUCTS**

(71) Applicant: Thomson Licensing, 92130 Issy-les-Moulineaux (FR)
(72) Inventor: BOREL, Thierry, 35576 CESSON SEVIGNE (FR); ROUTHIER, Pierre-Hugues, BURBANK (US); LEYENDECKER, Philippe, 35576 CESSON SEVIGNE (FR)
(74) Representative: Huchet, Anne

(57) **Abstract**

The disclosure relates to a method for encoding a sequence of frames, comprising:
- obtaining an input video stream (22) comprising input frames captured at a first frame rate and at a first spatial resolution,
- encoding a first video stream (23) comprising static frames at a second frame rate, lower than said first frame rate, and at said first spatial resolution, where a static frame comprises static video elements of one of said input frame, and
- encoding a second video stream (24) comprising dynamic frames at said first frame rate and at a second spatial resolution, lower than said first spatial resolution, where a dynamic frame comprises dynamic video elements of one of said input frame.

## Description

### 1. Technical field

The present disclosure relates to the field of signal processing, and more specifically to the processing of videos.

It offers a technique for encoding high quality video while maintaining image detail rendering, even for moving objects, by generating two video streams from a single video source, one containing static video elements and one containing moving video elements, and by encoding in a different manner the two video streams. It also offers a technique for decoding the two video streams and recombine them into a single video stream for rendering.

The present disclosure is for example adapted for encoding, and decoding for rendering, videos relating to sport events.

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it should be understood that these statements are to be read in this light, and not as admissions of prior art.

Previously, television broadcasters converted standard definition content to high definition (HD) and now many convert HD content to Ultra High Definition (UHD) content with resolution as high as 4K. UHD content with its higher resolution provides a higher level of detail on static scenes, but as soon as motion is present either in the scene itself or because of motion of the camera, motion blur occurs, drastically reducing the perception of detail of moving objects. Under such circumstances, the content no longer retains its 4K characteristics from a detail-rendering standpoint. Decreasing the amount of time the shutter is open to compensate for such motion blur does not offer a viable solution as the induced judder becomes uncomfortable to watch. Currently, the only viable solution requires increasing the sampling frequency of the scene, while keeping a reasonable shutter angle (180° or larger). However, shooting and transmitting an event at a high resolution and a high frame rate (e.g., 4K/120 fps - frame per second) becomes difficult, if not impossible, since many current transmission devices do not support such formats. Even with devices capable of supporting such formats, transmitting content at such formats becomes very costly in terms of bandwidth. For this reason, broadcasters and cable operators prefer to allocate the fixed bandwidth as multiple (e.g., four) 4K/30 fps channels rather than providing only one 4K/120 fps channel that consumes the same bandwidth.

Thus, a need exists for an alternate technique for encoding high quality content while preserving detail rendering, even for moving objects, which doesn't present all the drawbacks of the prior art techniques.

### 3. Summary

The present disclosure relates to a method for encoding a sequence of frames, comprising:
- obtaining an input video stream comprising input frames captured at a first frame rate and at a first spatial resolution,
- encoding a first video stream comprising static frames at a second frame rate, lower than said first frame rate, and at said first spatial resolution, where a static frame comprises static video elements of one of said input frame, and
- encoding a second video stream comprising dynamic frames at said first frame rate and at a second spatial resolution, lower than said first spatial resolution, where a dynamic frame comprises dynamic video elements of one of said input frame.

For example, such first frame rate is a high frame rate (HFR), for instance 120 frames per second, and said first spatial resolution is a high resolution (HSR), for instance 3840*2160 pixels Ultra HD. Such second frame rate is a low frame rate (LFR), for instance 30 fps, and said second spatial resolution is a low resolution (LSR), for instance 1920*1080 pixels.

In order to overcome at least one shortcoming of the prior art, the present disclosure offers a technique for encoding two video streams obtained from a single high quality video source, one containing static video elements and one containing moving video elements, with different spatial resolutions and frame rates.

In this way, static frame comprising static video elements of the input frames could be encoded at high spatial resolution and low frame rate, and dynamic frame comprising dynamic video elements of the input frames could be encoded at low spatial resolution and high frame rate. The present disclosure thus aims at combining both HFR and LFR techniques simultaneously and appropriately on the relevant portion of each frame.

In this way, the rendering of details is improved for moving objects, compared to prior art techniques in which moving objects are encoded at high spatial resolution.

In particular, only one camera is used to capture input frames at a first frame rate and at a first spatial resolution, and further processing aims at encoding static video elements at a high spatial resolution and a low frame rate, and dynamic video elements at a low spatial resolution and a high frame rate. Such technique can thus be used to encode input frames comprising both static areas and dynamic areas.

In addition, the bandwidth can be optimized, by adapting the spatial resolution and the frame rate to the content (static or dynamic video elements) of the input frames.

In particular, the technique according to the disclosure offers a better perceived quality at a given compression/transmission rate, or a much better compression/transmission rate for a given rendering quality, compared to prior art techniques.

According to at least one embodiment, the static frame and the dynamic frame are obtained, for one of said input frame, by:
- determining a region of said input frame comprising at least one pixel corresponding to a static video element and a region of said input frame comprising at least one pixel corresponding to a dynamic video element,
- generating said static frame by keeping said at least one pixel corresponding to a static video element and changing to a predetermined color the at least one pixel corresponding to a dynamic video element,
- generating said dynamic frame by keeping said at least one pixel corresponding to a dynamic video element and changing to a predetermined color the at least one pixel corresponding to a static video element.

In other words, in order to generate a static frame from an input frame, the pixels that are not static in the input frame (i.e. the pixels corresponding to a dynamic video element) are removed, for example by changing them to black pixels. In order to generate a dynamic frame from said input frame, the pixels that are static in the input frame are removed, for example by changing them to black pixels. Such static frame and dynamic frame are complementary, which means that the addition of the pixel values of the static frame and the dynamic frame will result in the input frame.

According to an embodiment of the disclosure, the first video stream is obtained by:
- generating one static frame from each input frame, delivering a stream of static frames at said first frame rate and at said first spatial resolution, and
- selecting at least one static frame from said stream of static frames, delivering the first video stream at said second frame rate and at said first spatial resolution.

According to this example, the original spatial resolution is kept, and the first video stream is obtained by dropping some static frame in order to reduce the frame rate to the second frame rate.

According to an embodiment of the disclosure, the second video stream is obtained by:
- generating one dynamic frame from each input frame, delivering a stream of dynamic frames at said first frame rate and at said first spatial resolution,
- filtering each dynamic frame of said stream of dynamic frames, delivering the second video stream at said first frame rate and at said second spatial resolution.

According to this example, the original frame rate is kept, and the second video stream is obtained by filtering the dynamic frames to a lower spatial resolution.

According to an embodiment of the disclosure, said first video stream and said second video stream are encoded with maintained temporal references.

A corresponding decoding device can thus decode the two video streams in a more efficient and simple manner.

The two encoded video streams can then be stored and/or transmitted, to enable retrieval and decoding by at least one decoder.

The present disclosure also pertains to a device for encoding a sequence of frames, comprising at least one processor configured to:
- obtain an input video stream comprising input frames captured at a first frame rate and at a first spatial resolution,
- encode a first video stream comprising static frames at a second frame rate lower than said first frame rate and at said first spatial resolution, where a static frame comprises static video elements of one of said input frame, and
- encode a second video stream comprising dynamic frames at said first frame rate and at a second spatial resolution lower than said first spatial resolution, where a dynamic frame comprises dynamic video elements of one of said input frame.

Such a device can be especially adapted to implement the encoding method described here above. It could of course comprise the different characteristics pertaining to the encoding method according to an embodiment of the disclosure, which can be combined or taken separately. Thus, the characteristics and advantages of the device are the same as those of the encoding method and are not described in more ample detail.

In addition, the present disclosure pertains to a method for decoding a received sequence of frames, comprising:
- decoding a first video stream comprising static frames at a second frame rate and at a first spatial resolution, where a static frame comprises static video elements of an input frame,
- decoding a second video stream comprising dynamic frames at a first frame rate, higher than said second frame rate, and at a second spatial resolution, lower than said first spatial resolution, where a dynamic frame comprises dynamic video elements of an input frame, and
- obtaining, from said first video stream and said second video stream, an output video stream at said first frame rate and at said first spatial resolution.

The present disclosure thus also offers a technique for decoding two video streams, one containing static video elements and one containing moving video elements encoded with different spatial resolutions and frame rates, and for reconstructing a single high quality video output stream from these streams.

According to this embodiment, the rendering of details is improved for moving objects, compared to prior art techniques in which moving objects are encoded at high spatial resolution.

Such method for decoding a received sequence of frames could be implemented to decode the two video streams obtained by the encoding method described above.

It should be noted that the characteristics and advantages of the decoding method are the same as those of the encoding method.

According to a specific embodiment, the output video stream is obtained by:
- repeating at least one static frame of said first video stream, delivering a stream of static frames at said first frame rate and at said first spatial resolution,
- upsampling each dynamic frame of said second video stream, delivering a stream of dynamic frames at said first frame rate and at said first spatial resolution,
- combining said stream of static frames and said stream of dynamic frames, delivering said output video stream.

In particular, combining said stream of static frames and said stream of dynamic frames is implemented on a frame by frame basis, by adding the pixel values of a static frame and a dynamic frame obtained from the same input frame.

According to an embodiment of the disclosure, the first video stream and the second video stream are temporarily aligned in order to obtain said output video stream.

The present disclosure also pertains to a device for decoding a received sequence of frames, comprising at least one processor configured to:
- decode a first video stream comprising static frames at a second frame rate and at a first spatial resolution, where a static frame comprises static video elements of an input frame,
- decode a second video stream comprising dynamic frames at a first frame rate, higher than said second frame rate, and at a second spatial resolution lower than said first spatial resolution, where a dynamic frame comprises dynamic video elements of an input frame, and
- obtain, from said first video stream and said second video stream, an output video stream at said first frame rate and at said first spatial resolution.

Such a device can be especially adapted to implement the method for decoding a received sequence of frames described here above. It could of course comprise the different characteristics pertaining to the method according to an embodiment of the disclosure, which can be combined or taken separately. Thus, the characteristics and advantages of the device are the same as those of the method and are not described in more ample detail.

Another aspect of the disclosure pertains to at least one computer program product downloadable from a communication network and/or recorded on a medium readable by computer and/or executable by a processor comprising software code adapted to perform a method for encoding and/or decoding a sequence of frames, wherein the software code is adapted to perform the steps of the method for encoding and/or decoding a sequence of frames described above.

In addition, the present disclosure concerns at least one non-transitory computer readable medium comprising a computer program product recorded thereon and capable of being run by a processor, including program code instructions for implementing the steps of the method for encoding and/or decoding a sequence of frames previously described.

Certain aspects commensurate in scope with the disclosed embodiments are set forth below. It should be understood that these aspects are presented merely to provide the reader with a brief summary of certain forms the disclosure might take and that these aspects are not intended to limit the scope of the disclosure. Indeed, the disclosure may encompass a variety of aspects that may not be set forth below.

### 4. Brief description of the drawings

The disclosure will be better understood and illustrated by means of the following embodiment and execution examples, in no way limitative, with reference to the appended figures in which:
- Figure 1 is a flow chart illustrating the main steps of a method for encoding a sequence of frames according to an embodiment of the disclosure;
- Figure 2 depicts an example of the encoding of a sequence of frames representing a tennis match, according to the encoding method of Figure 1;
- Figure 3 is a flow chart illustrating the main steps of a method for decoding a received sequence of frames according to an embodiment of the disclosure;
- Figure 4 depicts an example of the decoding of a received sequence of frames representing a tennis match, according to the decoding method of Figure 3;
- Figures 5 and 6 are block diagrams of a device implementing the encoding method of Figure 1 and a device implementing the decoding method of Figure 3, respectively.

In the figures, the represented blocks are purely functional entities, which do not necessarily correspond to physically separate entities. Namely, they could be developed in the form of software, hardware, or be implemented in one or several integrated circuits, comprising one or more processors.

### 5. Description of at least one embodiment

It is to be understood that the figures and descriptions of the present disclosure have been simplified to illustrate elements that are relevant for a clear understanding of the present disclosure, while eliminating, for purposes of clarity, many other elements found in typical devices for encoding or decoding a sequence of frames.

The present disclosure proposes a new technique for encoding a sequence of frames, enabling to encode in a different manner distinct portions of the input frames, and a technique for decoding such sequence.

### 5.1 Encoding side

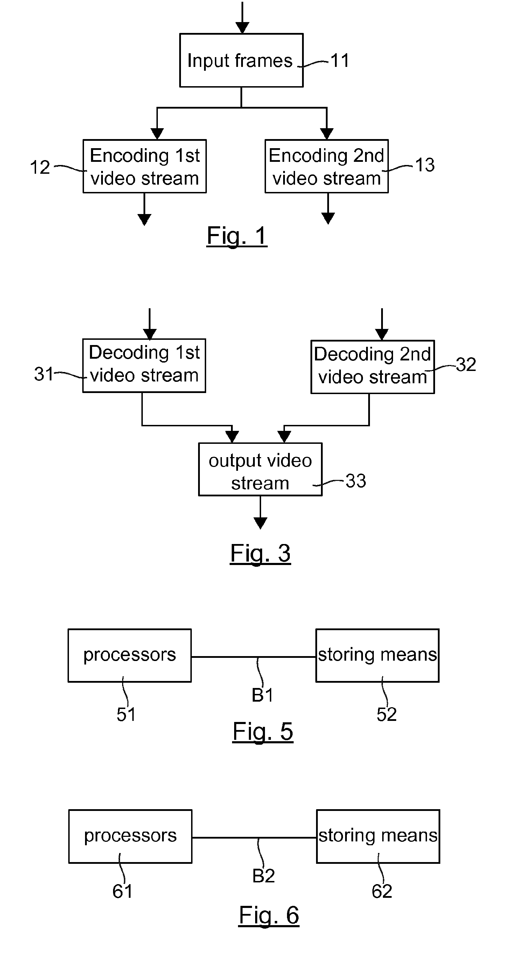

The main steps of the method for encoding a sequence of frames according to an embodiment of the invention are illustrated in **Figure 1**.

During a first step 11, a single input video stream is obtained. Such input video stream comprises input frames captured at a first frame rate and at a first spatial resolution. Two video streams are generated from this input video stream:
- a first video stream comprising static frames at a second frame rate lower than the first frame rate and at the first spatial resolution, where a static frame comprises static video elements of one of said input frame, and
- a second video stream comprising dynamic frames at the first frame rate and at a second spatial resolution, lower than the first spatial resolution, where a dynamic frame comprises dynamic video elements of one of said input frame.

During a second step 12, the first video stream is encoded by a first encoder.

During a third step 13, the second video stream is encoded by a second encoder.

Note that third step 13 may be placed between first step 11 and second step 12, or implemented simultaneously to second step 12.

The first and second encoded streams can then be transmitted and/or stored for later transmission.

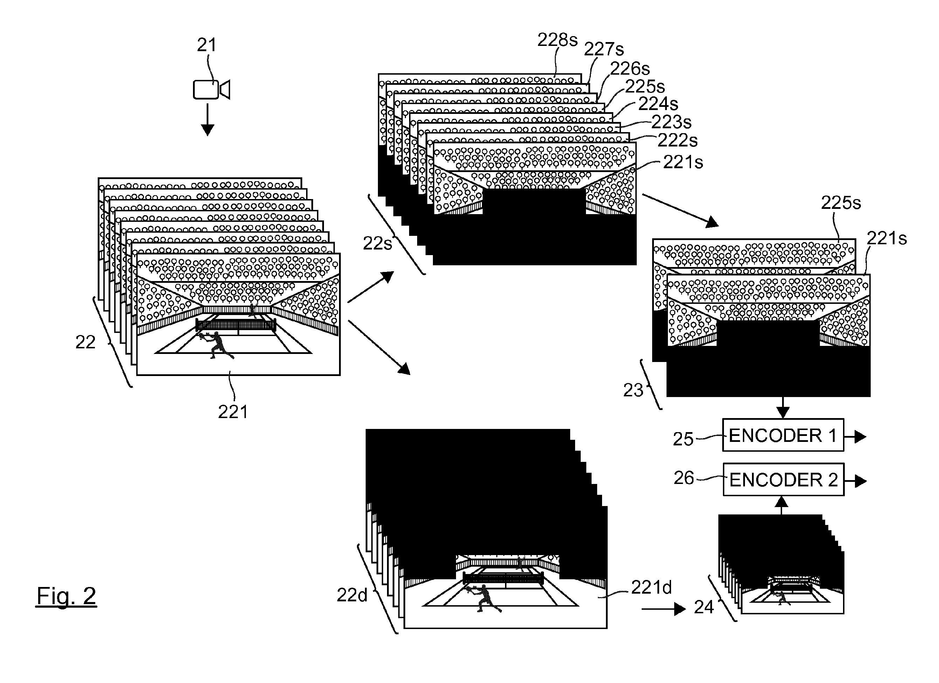

**Figure 2** illustrates a graphical depiction of the encoding of a sequence of frames, according to the encoding method described above.

Let's consider for example a sport event, like a tennis match. According to this example, an input video stream (tennis match) to be transmitted is captured by a static camera 21. Such input video stream 22 comprises input frames captured at a high frame rate, for instance 120 fps, and a high spatial resolution, for instance 3840*2160 pixels Ultra-HD. Such input frames comprise both static areas (also called static portions or elements), such as the crowd in the tennis arena, and moving areas (also called dynamic portions or elements), such as the tennis players on the field.

As explained above, two video streams are obtained from the input video stream 22. The first video stream comprises only pixels that are static, and the second video stream comprises all the other pixels.

For example, in order to obtain these two video streams, each input frame is "split" into a "static frame" and a "dynamic frame", by analyzing the motion of the pixels between the input frames.

If we consider the first input frame 221 for example, a region of the first input frame 221 comprising at least one pixel corresponding to a static video element, and a region of the first input frame 221 comprising at least one pixel corresponding to a dynamic video element, are determined. A static frame 221s could then be generated by keeping the pixel(s) corresponding to static video element(s) and changing to a predetermined color (for example black) the pixel(s) corresponding to dynamic video element(s). According to this example, the static frame 221 s keeps "static" pixels corresponding to the crowd in the tennis arena. Similarly, a dynamic frame 221 d could be generated by keeping the pixel(s) corresponding to dynamic video element(s) and changing to a predetermined color (for example black) the pixel(s) corresponding to static video element(s). According to this example, the dynamic frame 221 d keeps "dynamic" pixels (i.e. pixels which are not "static") corresponding to the tennis players.

The algorithm used to define which pixels go to the static frame and which pixels go to the dynamic frame is classical. Such algorithm can be an algorithm identifying static area. Such algorithm can also be dynamic, using similar techniques as used for motion detection during the video coding process, like analysis of motion vectors between successive input frames. For instance, motion vector analysis can be made thanks to usual block matching techniques or using pixel recursive motion estimation algorithms. Such techniques are for example disclosed in "Motion estimation techniques for digital TV: a review and a new contribution" (F. Dufaux et al., Proceedings of IEEE, vol. 83, issue 6).

The purpose here is to detect pixels that do not move or change during at least an integer number (>= 1) of low frequency rate periods.

Such static frame and dynamic frame are complementary, which means that the addition of the pixel values of the static frame and the dynamic frame will result in the input frame. In addition, in order to avoid combination of current pixels and black pixels within a macroblock, the areas with black pixels should match the macroblock granularity.

According to the disclosed embodiment, a static frame 221s (respectively 222s, ..., 228s) and a dynamic frame 221 d (respectively 222d, ..., 228d) are obtained for each input frame 221 (respectively 222, ..., 228) of the input video stream 22. The region comprising pixel(s) corresponding to static video element(s) and the region comprising pixel(s) corresponding to dynamic video element(s) could be updated for each input frame.

According to the embodiment illustrated in Figure 2, the first video stream 23 is obtained from the static frames 22s. More specifically, the first video stream 23 is obtained by:
- generating one static frame 221s, 222s, ..., 228s from each input frame 221, 222, ..., 228, delivering a stream 22s of static frames at a frame rate of 120 fps and at a spatial resolution of 3840*2160 pixels Ultra-HD. In other words, the stream 22s of static frames contains only pixels that are static: the original resolution is kept, the other pixels are removed (i.e. changed to black pixels);
- selecting at least one static frame 221s, 225s from the stream of static frames, delivering the first video stream 23 at a frame rate of 30 fps and the spatial resolution of 3840*2160 pixels Ultra-HD. In other words, the stream 22s of static frames is processed to reduce the frame rate to a lower frame rate, for instance 30 frames per second (according to this example, 4 times less frames). This can be done by dropping frames, for example by dropping three out of four static frames.

According to the embodiment illustrated in Figure 2, the second video stream 24 is obtained from the dynamic frames 22d. More specifically, the second video stream 24 is obtained by:
- generating one dynamic frame 221 d, 222d, ..., 228d from each input frame 221, 222, ..., 228, delivering a stream 22d of dynamic frames at a frame rate of 120 fps and at a spatial resolution of 3840*2160 pixels Ultra-HD. In other words, the stream 22d of dynamic frames contains all the other pixels, with the static pixels removed (i.e. changed to black pixels).
- filtering each dynamic frame 221 d, 222d, ..., 228d of the stream of dynamic frames, delivering the second video stream 24 at the frame rate of 120 fps and at a lower spatial resolution of 1920*1080 pixels HD (4 times less pixels).

The two video streams are then encoded (compressed), using for example HEVC standard. In particular, the first video stream 23 and second video stream 24 are encoded with maintained temporal references, in order to facilitate the reconstruction of a single stream at the decoding side.

For example, two different encoders can be used, one encoder 25 working at the second frame rate (for example 30fps), and the other one 26 working at the first frame rate (for example 120fps).

The first and second encoded streams can then be transmitted and/or stored for later transmission.

In particular, the transport stream, which is classically used to synchronize video and audio streams, could be used to synchronize the first and second video streams.

### 5.2 Decoding side

The main steps of the method for decoding a received sequence of frames according to an embodiment of the invention are illustrated in **Figure 3**.

During a first step 31, a first video stream is decoded. Such first video stream comprises static frames at a second frame rate and at a first spatial resolution, where a static frame comprises static video elements of an input frame.

During a second step 32, a second video stream is decoded. Such second video stream comprises dynamic frames at a first frame rate, higher than said second frame rate, and at a second spatial resolution, lower than said first spatial resolution, where a dynamic frame comprises dynamic video elements of an input frame.

Note that second step 32 may be placed before first step 31, or implemented simultaneously to first step 31.

During a third step 33, an output video stream is obtained from the first video stream and the second video stream. Such output video stream comprises output frames at said first frame rate and at said first spatial resolution. The output frames of the output video stream can then be stored and/or rendered on a display.

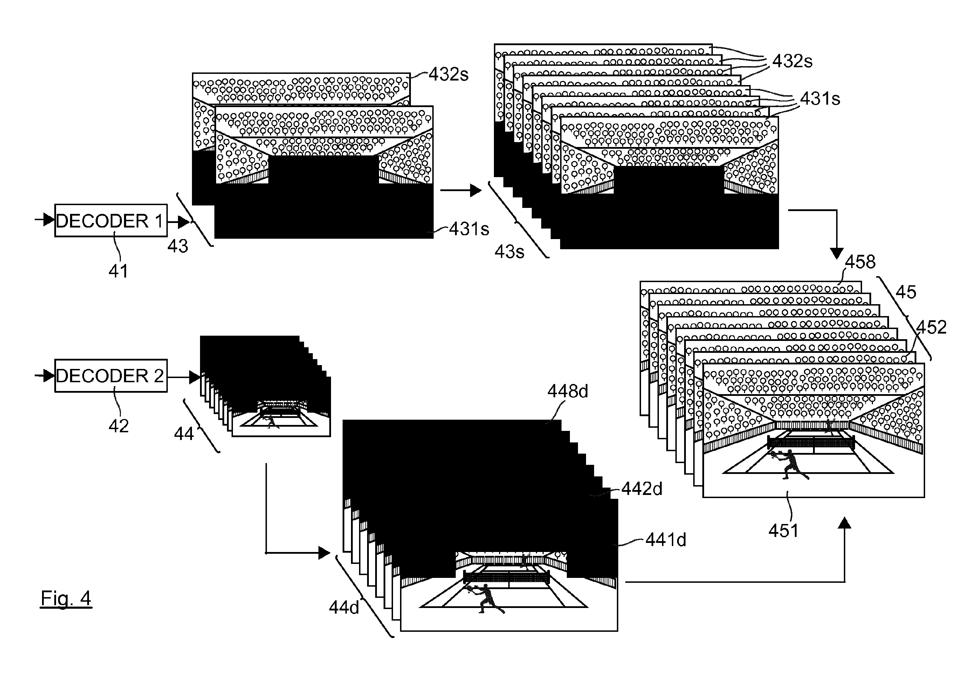

**Figure 4** illustrates a graphical depiction of the decoding of the received sequence of frames, according to the decoding method described above, for the tennis match example illustrated in Figure 2.

Once the first and second encoded streams are received, they are firstly decoded separately. Once again, two different decoders can be used, one decoder 41 working at the second frame rate (for example 30fps), and the other one 42 working at first frame rate (for example 120fps).

According to the disclosed example, the first video stream 43, delivered by the first decoder 41, comprises static frames at a second frame rate of 30fps and at a first spatial resolution of 3840*2160 pixels. The second video stream 44, delivered by the second decoder 42, comprises dynamic frames at a first frame rate of 120 fps and at a second spatial resolution of 1920*1080 pixels.

In order to obtain the output video stream, at least one static frame 431s, 432s of the first video stream 43 is repeated, delivering a stream of static frames 43s at the first frame rate of 120 fps and at the first spatial resolution of 3840*2160 pixels. In other words, the first video stream 43 containing static pixels is converted back to original frame rate using frame repeat. For example, the static frame 431s and the static frame 432s are each repeated 3 times, to obtain a sequence of eight static frames: 431 s, 431 s, 431 s, 431 s, 432s, 432s, 432s, 432s. Each dynamic frame of the second video stream 44 is up-sampled, delivering a stream of dynamic frames 44d at the first frame rate of 120 fps and at the first spatial resolution of 3840*2160 pixels. In other words, the second video stream 44 containing dynamic pixels is converted back to original resolution using up-sampling filtering.

The stream of static frames 43s and the stream of dynamic frames 44d can then be combined, to obtain the output video stream 45.

For example, the two resulting video 43s and 44d are recombined on a frame by frame basis, to restore a full image. This can be done by adding the pixels values of a static frame and the pixels values a dynamic frame obtained from the same input frame, in order to obtain an output frame. For example, the first output frame 451 is obtained by adding the values of the pixels of the static frame 431 s and the dynamic frame 441 d. The second output frame 452 is obtained by adding the values of the pixels of the static frame 431s and the dynamic frame 442d. The eighth output frame 458 is obtained by adding the values of the pixels of the static frame 432s and the dynamic frame 448d.

In particular, said first video stream 43 and second video stream 44, or said stream of static frames 43s and stream of dynamic frames 44d, are temporarily aligned in order to combine the two streams on a frame by frame basis.

### 5.3 Devices

Figure 5 illustrates an example of a device for encoding a sequence of frames according to an embodiment of the disclosure. Only the essential elements of the encoding device are shown.

Such an encoding device comprises at least:
- at least one processor 51 for executing the applications and programs stored in a nonvolatile memory of the device, and especially configured to:
   - obtain an input video stream comprising input frames captured at a first frame rate and at a first spatial resolution,
   - encode a first video stream comprising static frames at a second frame rate, lower than said first frame rate, and at said first spatial resolution, where a static frame comprises static video elements of one of said input frame, and
   - encode a second video stream comprising dynamic frames at said first frame rate and at a second spatial resolution, lower than said first spatial resolution, where a dynamic frame comprises dynamic video elements of one of said input frame;
- storing means 52, such as a volatile memory,
- an internal bus B1 to connect the various modules and all means well known to the skilled in the art for performing the encoding device functionalities.

Figure 6 illustrates an example of a device for decoding a received sequence of frames, according to an embodiment of the disclosure. Only the essential elements of the decoding device are shown.

Such a decoding device comprises at least:
- at least one processor 61 for executing the applications and programs stored in a nonvolatile memory of the device and especially configured to:
   - decode a first video stream comprising static frames at a second frame rate and at a first spatial resolution, where a static frame comprises static video elements of an input frame,
   - decode a second video stream comprising dynamic frames at a first frame rate, higher than said second frame rate, and at a second spatial resolution, lower than said first spatial resolution, where a dynamic frame comprises dynamic video elements of an input frame, and
   - obtain, from said first video stream and said second video stream, an output video stream at said first frame rate and at said first spatial resolution;
- storing means 62, such as a volatile memory;
- an internal bus B2 to connect the various modules and all means well known to the skilled in the art for performing the decoding device functionalities.

Such encoding device and/or decoding device could each be implemented according to a purely software realization, purely hardware realization (for example in the form of a dedicated component, like in an ASIC, FPGA, VLSI, ...), or of several electronics components integrated into a device or in a form of a mix of hardware elements and software elements. It could also be implemented in the form of a system.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

For example, the one or more processors 51 may be configured to execute the various software programs and/or sets of instructions of the software components to perform the respective functions of: obtaining an input video stream comprising input frames captured at a first frame rate and at a first spatial resolution, encoding a first video stream comprising static frames at a second frame rate, lower than said first frame rate, and at said first spatial resolution, and encoding a second video stream comprising dynamic frames at said first frame rate and at a second spatial resolution, lower than said first spatial resolution, in accordance with embodiments of the invention.

The one or more processors 61 may be configured to execute the various software programs and/or sets of instructions of the software components to perform the respective functions of: decoding a first video stream comprising static frames at a second frame rate and at a first spatial resolution, decoding a second video stream comprising dynamic frames at a first frame rate, higher than said second frame rate, and at a second spatial resolution, lower than said first spatial resolution, and obtaining, from said first video stream and said second video stream, an output video stream at said first frame rate and at said first spatial resolution, in accordance with embodiments of the invention.

It should also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions.

As will be appreciated by one skilled in the art, aspects of the present principles can be embodied as a system, method, computer program or computer readable medium. Accordingly, aspects of the present principles can take the form of an entirely hardware embodiment, an entirely software embodiment (including firmware, resident software, micro-code, and so forth), or an embodiment combining software and hardware aspects that can all generally be referred to herein as a "circuit," "module", or "system." Furthermore, aspects of the present principles can take the form of a computer readable storage medium. Any combination of one or more computer readable storage medium(s) may be utilized.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information therefrom. A computer readable storage medium can be, for example, but is not limited to, an electronic, magnetic, optical, electromagnetic, infrared, or semiconductor system, apparatus, or device, or any suitable combination of the foregoing. It is to be appreciated that the following, while providing more specific examples of computer readable storage mediums to which the present principles can be applied, is merely an illustrative and not exhaustive listing as is readily appreciated by one of ordinary skill in the art: a portable computer disc, a hard disc, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method for encoding a sequence of frames, comprising:
- obtaining (11) an input video stream (22) comprising input frames captured at a first frame rate and at a first spatial resolution,
- encoding (12) a first video stream (23) comprising static frames at a second frame rate, lower than said first frame rate, and at said first spatial resolution, where a static frame comprises static video elements of one of said input frame, and
- encoding (13) a second video stream (24) comprising dynamic frames at said first frame rate and at a second spatial resolution, lower than said first spatial resolution, where a dynamic frame comprises dynamic video elements of one of said input frame.

2. The method according to claim 1, wherein said first video stream is obtained by:
- generating one static frame from each input frame, delivering a stream of static frames (22s) at said first frame rate and at said first spatial resolution,
- selecting at least one static frame from said stream of static frames, delivering the first video stream at said second frame rate and at said first spatial resolution.

3. The method according to any one of claims 1 and 2, wherein said second video stream is obtained by:
- generating one dynamic frame from each input frame, delivering a stream of dynamic frames (22d) at said first frame rate and at said first spatial resolution,
- filtering each dynamic frame of said stream of dynamic frames, delivering the second video stream at said first frame rate and at said second spatial resolution.

4. The method according to any one of claims 1 to 3, wherein, for one of said input frame (221), the static frame (221 s) and the dynamic frame (221 d) are obtained by:
- determining a region of said input frame comprising at least one pixel corresponding to a static video element and a region of said input frame comprising at least one pixel corresponding to a dynamic video element,
- generating said static frame by keeping said at least one pixel corresponding to a static video element and changing to a predetermined color the at least one pixel corresponding to a dynamic video element,
- generating said dynamic frame by keeping said at least one pixel corresponding to a dynamic video element and changing to a predetermined color the at least one pixel corresponding to a static video element.

5. The method according to any one of claims 1 to 4, wherein said first video stream and said second video stream are encoded with maintained temporal references.

6. A method for decoding a received sequence of frames, comprising:
- decoding (31) a first video stream (43) comprising static frames at a second frame rate and at a first spatial resolution, where a static frame comprises static video elements of an input frame,
- decoding (32) a second video stream (44) comprising dynamic frames at a first frame rate, higher than said second frame rate, and at a second spatial resolution, lower than said first spatial resolution, where a dynamic frame comprises dynamic video elements of an input frame, and
- obtaining (33), from said first video stream and said second video stream, an output video stream at said first frame rate and at said first spatial resolution.

7. The method according to claim 6, wherein said output video stream is obtained by:
- repeating at least one static frame of said first video stream, delivering a stream of static frames (43s) at said first frame rate and at said first spatial resolution,
- up-sampling each dynamic frame of said second video stream, delivering a stream of dynamic frames (44d) at said first frame rate and at said first spatial resolution,
- combining said stream of static frames and said stream of dynamic frames, delivering said output video stream.

8. The method according to claim 7, wherein combining said stream of static frames and said stream of dynamic frames is implemented on a frame by frame basis, by adding the pixel values of a static frame and a dynamic frame obtained from the same input frame.

9. The method according to any one of claims 6 to 8, wherein said first video stream and said second video stream are temporarily aligned in order to obtain said output video stream.

10. A device for encoding a sequence of frames, comprising at least one processor configured to:
- obtain an input video stream comprising input frames captured at a first frame rate and at a first spatial resolution,
- encode a first video stream comprising static frames at a second frame rate lower than said first frame rate and at said first spatial resolution, where a static frame comprises static video elements of one of said input frame, and
- encode a second video stream comprising dynamic frames at said first frame rate and at a second spatial resolution lower than said first spatial resolution, where a dynamic frame comprises dynamic video elements of one of said input frame.

11. A device for decoding a received sequence of frames, comprising at least one processor configured to:
- decode a first video stream comprising static frames at a second frame rate and at a first spatial resolution, where a static frame comprises static video elements of an input frame,
- decode a second video stream comprising dynamic frames at a first frame rate, higher than said second frame rate, and at a second spatial resolution lower than said first spatial resolution, where a dynamic frame comprises dynamic video elements of an input frame, and
- obtain, from said first video stream and said second video stream, an output video stream at said first frame rate and at said first spatial resolution.

12. A computer program product downloadable from a communication network and/or recorded on a medium readable by computer and/or executable by a processor comprising program code instructions to execute the steps of the encoding method according to claim 1 when this program is executed on a computer.

13. A computer program product downloadable from a communication network and/or recorded on a medium readable by computer and/or executable by a processor comprising program code instructions to execute the steps of the decoding method according to claim 6 when this program is executed on a computer.
